# EUROPEAN PATENT SPECIFICATION

(11) **EP 2 719 998 B1**
(45) Date of publication and mention of the grant of the patent: **19.08.2015**
(21) Application number: 12460083.4
(22) Date of filing: 04.12.2012
(51) Int. Cl.: G01B 11/27, G01C 15/00

(54) **Axisymmetric telescope centering device**
Achsensymmetrische Teleskopzentriervorrichtung
Dispositif de centrage de télescope axisymétrique

(30) Priority: 09.10.2012 PL 40111012
(43) Date of publication of application: 16.04.2014
(73) Proprietor: Dolnoslaska Szkola Wyzsza, 53-609 Wroclaw (PL)
(72) Inventor: Wojciech, Anigacz, 45-267 Opole (PL)
(74) Representative: Surmiak, Wieslawa Halina

(56) References cited:
- DE-A1- 2 856 158
- US-A- 515 815
- US-A- 970 631
- US-A1- 2004 021 865

## Description

The present invention pertains to an axisymmetric telescope centering device.

U.S. Patent No. 5,359,781 "Self centering pipe axis laser guide and saddle" is an example of prior art for centering pipe axis laser device, which comprises of a shaped guide in the centerline, where a lead screw and a spider lever are situated in order to expand or retract three parallel links from the guide axis, once the links contact the inner diameter of the pipe or other element of circular cross section. The parallel links are spaced 120⁰ apart and connected with the guide through lever system. On the axis of the guide is situated a drilled slot, where the laser is being placed. The laser is being aligned by a lead screw. The links are located parallel to the axis of the pipe. The laser beam, after alignment with the axis of the pipe, is used to set next elements of circular cross-section, including tubes, bushings and bearings. The construction of the device, used explicitly for laser alignment, is very complex, and due to a large number of links, levers and joints mechanical clearance can occur, which adversely affect the correct centering of the laser, and thus proper alignment of other elements of circular cross section. The contact section between the links and the inner surface of the pipe is too long, which causes that errors in alignment and construction of the pipe are transferred to other centering elements.

Another example of prior art is US Pat. No. 7,467,474. "Method and apparatus for pipe alignment tool", a laser centering device used to determine axis orientation of various types of cables of circular cross section. The laser centering device has a main housing, cylindrical in shape, which has four adjustable legs arranged radially, at 90⁰ feet and completed a rotating the device in the line of circular cross section. In the centerline of the housing is a hole, in which the laser with batteries is being placed. The device has very simple construction and can be exclusively used for laser alignment in small diameter pipes.

Further example of a prior art is the Registered Utility Model - Certificate No. PL 64420 - a tripod for holding surveyor's instruments having a unit with guides to slide the element on which the instrument is mounted, and three legs connected to the unit. The guides are placed obliquely in relation to the horizontal position of the body. It is desirable that the element moved in the guides is in the shape of a cuboid. It is also desirable that the body of the unit with guides comprises of a fixing screw with axis parallel to the guides. The tripod enables to change the holding position of the surveyor's instrument, i.e. a telescope, both horizontally and vertically; and thereby the instrument's line of sight can be aligned, both vertically and horizontally, to the desired position. Proper telescope coaxisymmetric alignment is very difficult, because the top in this tripod slides together to vertical and horizontal position. One way adjustment in horizontal or vertical position is not possible.

From US 2004/0021865 A1 it is known to align a lens with respect to an axis of beam propagation by using a vacuum chuck having a clamping member.

Field of the invention pertains to an axisymmetric telescope centering device having a telescope axis alignment system based on the self-aligning bearing, which is centrally located inside the chuck body. On the chuck body are mounted dowel pins connected with the alignment system arms of a clamping ring. The arms of the clamping ring end with micrometric screws. It is desirable that the clamping ring arms are perpendicular to each other and to the dowel pins. It is also desirable that the dowel pins are perpendicular to the chuck body. It is also desirable that the extendable clamping arms are replaceable.

The embodiment of this invention allows it to be mounted to, both inner and outer surface of an axisymmetric element, depending on which surface can be used as a reference base. The self-aligning bearing, in which the telescope is mounted, permits setting the axis in the required direction. The equally-extendable clamping arms replaceable of various lengths according to one embodiment of the invention for centering elements of different diameter. Mutual location of rectilinear elements of the alignment system permits adjustment of the telescope's position in two mutually perpendicular radical directions. One embodiment of the invention having a simpler construction and providing significantly higher accuracy in telescope axisymmetric alignment than the common devices. Furthermore, the alignment system permits easy adjustment of the telescope axis position. One embodiment of the invention permits alignment of the telescope, as well as other measuring instruments, including laser, level, theodolite. Precise centering of the telescope permits coaxial positioning of any number of axisymmetric elements over a distance of several meters from the axisymmetric base element with very high accuracy.

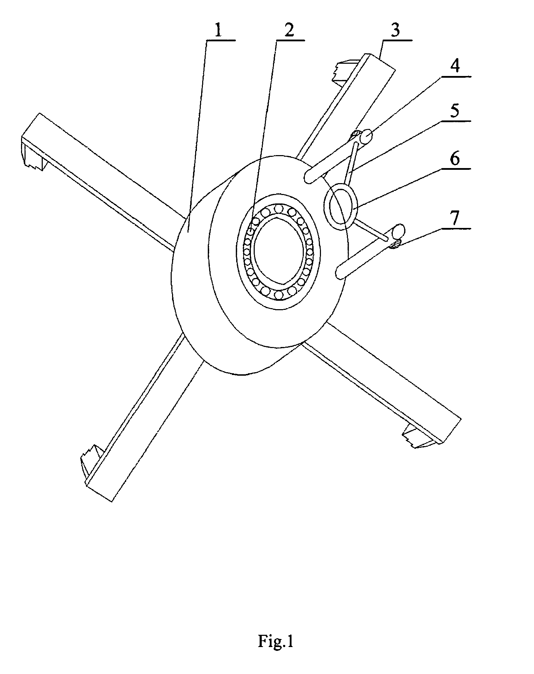

The figure illustrates one embodiment of the invention showing schematically the axisymmetric telescope centering device.
Axisymmetric telescope centering device of the invention having a self-centering 4-jaw body **1** with four extendable arms **3** ended with steel jaw chucks. The self-centering chuck body **1** comprises of the telescope axis alignment system having self-aligning bearing **2** centrally located inside the chuck body **1.** The inner diameter of the self-aligning bearing **2** is equal to the outer diameter of the telescope objective. On the chuck body 1 are mounted dowel pins 4 connected with arms **5** of the clamping ring 6 of the alignment system. Arms **5** of the clamping ring **6** ended with micrometer screws **7.** Arms **5** of the clamping ring **6** are perpendicular to each other and to the dowel pins **4.** Dowel pins **4** are perpendicular to the chuck body **1.** The chuck body **1** has extendable clamping arms 3 that are replaceable. One embodiment of the invention is also for mounting the device in the axisymmetric base element via the extendable arms **3** of the chuck body **1** that make the move outward and inward together using Archimedes spiral located in the chuck body **1** after the size is properly adjusted to the diameter of the axisymmetric element. Once the device of the invention is mounted in the base hole of the axisymmetric element, the telescope axis is directed using the alignment system, to indicate the desirable axis. The telescope objective is mounted in self-aligning bearing **2** of the telescope axis aligning system, and the telescope eyepiece is placed in the clamping ring **6.** The centering process of the telescope eyepiece takes place, when mounting in the self-aligning bearing **2.** Spatial telescope axis orientation is stabilized by the telescope axis aligning system via micrometric screws **7** that change the length of the arms **5** of the clamping ring **6,** thereby the telescope position is changed to ensure that the axis orientation is in the desired central position. The point around which the telescope is rotated is the symmetry axis of the self-aligning bearing **2,** which should be in centerline of the axisymmetric base element.

## Claims

1. Axisymmetric telescope centering device, having a self-aligning chuck body (1) with extendable clamping arms (3), and a telescope axis alignment system with a self-aligning bearing (2) mounted centrally inside the chuck body (1), wherein on the chuck body **(1** are mounted dowel pins (4) which are connected with arms (5) of a clamping ring **(6)** of the alignment system, wherein the arms **(5)** of the clamping ring **(6)** end with micrometer screws **(7).**

2. A device according to claim 1, wherein said arms **(5)** of the clamping ring **(6)** are perpendicular to each other and to the dowel pins **(4).**

3. A device according to claim 1, wherein said dowel pins **(4)** are perpendicular to the chuck body **(1).**

4. A device according to claim 1, wherein said extendable clamping arms **(3)** of the chuck body **(1)** are replaceable.

## Patentansprüche

1. Die Fernrohr-Zentriervorrichtung im achsensymmetrischen Element, die mit einem selbstzentrierenden Grundkörper mit aufschiebbaren Armen, wo an ihren Enden Handgriffe angebracht sind, ausgestattet ist, **dadurch gekennzeichnet, dass** sie mit einem Fernrohrachse-Einstellsystem ausgestattet ist, dessen Pendellager **(2)** zentral innerhalb des Grundkörpers **( )** eingebaut sind, und dass am Grundkörper **(1)** Stifte **(4)** angebracht sind, die mit Armen **(5)** der Schelle **(6)** des Einstellsystems verbunden sind, wobei die Arme **(5)** der Schelle **(6)** mit Mikrometerschrauben **(7)** enden.

2. Die Vorrichtung gemäß dem Patentanspruch 1, dadurch ekennzeichnet, dass die Arme **(5)** der Schelle **(6)** senkrecht zueinander und zu den Stiften **(4)** sind.

3. Die Vorrichtung gemäß dem Patentanspruch 1, **dadurch gekennzeichnet, dass** Stifte **(4)** zum Grundkörper **(1)** senkrecht sind.

4. Die Vorrichtung gemäß dem Patentanspruch 1, **dadurch gekennzeichnet, dass** aufschiebbare Arme **(3)** des Grundkörpers **(1),** die mit Handgriffen enden, austauschbar sind.

## Revendications

1. L'appareil qui centre la lunette dans l'élément axial-symétrique, doté d'un corps d'autocentrage avec les bras écartables ayant des poignés sur la partie terminale, **caractérisé en ce qu**'il est équipé d'un dispositif de direction pour l'axe de la lunette dont le roulement à billes oscillant **(2)** se trouve centralement à l'interieur du corps **(** ), tandis que sur le corps se trouvent les goupilles **(4)** et les boucles **(6)** fixées sur les bras **(5)** du dispositif de direction, pendant que les bras **(5)** de la boucle **(6)** se terminent par les écrous micrométriques **(7).**

2. L'appareil selon la revendication 1, **caractérisé en ce que** les bras **(5)** de la boucle **(6)** sont perpendiculaires par rapport à eux- mêmes et par rapport aux goupilles (4).

3. L'appareil selon la revendication 1, **caractérisé en ce que** les goupilles sont perpendiculaires par rapport au corps.

4. L'appareil selon la revendication 1, **caractérisé en ce que** les bras écartables (3) du corps (1) terminés par les poignés, peuvent être échangés.
